Europäisches Patentamt

European Patent Office

Office européen des brevets

(19)

(11) Veröffentlichungsnummer : **0 111 636**
**B1**

(12) **EUROPÄISCHE PATENTSCHRIFT**

(45) Veröffentlichungstag der Patentschrift :
**11.02.87**

(51) Int. Cl.⁴ : **G 01 G 19/03**, G 01 G 19/08,
G 01 G 23/01, G 01 M 1/10

(21) Anmeldenummer : **83109165.7**

(22) Anmeldetag : **16.09.83**

(54) **Verfahren und Einrichtung zur Ermittlung des Gewichtes eines Fahrzeuges.**

(30) Priorität : 14.12.82 DE 3246201

(43) Veröffentlichungstag der Anmeldung :
27.06.84 Patentblatt 84/26

(45) Bekanntmachung des Hinweises auf die Patenterteilung : 11.02.87 Patentblatt 87/07

(84) Benannte Vertragsstaaten :
AT CH DE FR GB IT LI NL SE

(56) Entgegenhaltungen :
DE-A- 3 101 056
US-A- 3 581 561
US-A- 3 818 754

(73) Patentinhaber : WABCO Westinghouse Fahrzeugbremsen GmbH
Am Lindener Hafen 21 Postfach 91 12 80
D-3000 Hannover 91 (DE)

(72) Erfinder : Der Erfinder hat auf seine Nennung verzichtet

(74) Vertreter : Schrödter, Manfred
WABCO Westinghouse Fahrzeugbremsen GmbH Am
Lindener Hafen 21 Postfach 91 12 80
D-3000 Hannover 91 (DE)

**Beschreibung**

Die Erfindung bezieht sich auf eine Einrichtung und ein Verfahren zur Ermittlung des Gewichtes eines Fahrzeuges gemäß dem Oberbegriff der Patentansprüche 1 und 14.

Die Ermittlung des Gewichtes bei einem von einer Antriebsmaschine angetriebenen Fahrzeug ist z. B. dann von Bedeutung, wenn das Fahrzeug von einem Verbrennungsmotor angetrieben wird und mit einem Getriebe mit abgestuften Gängen versehen ist, für dessen Steuerung entsprechend vorgegebener Auswahlkriterien Schaltsignale erzeugt werden sollen.

Eine solche Einrichtung zur Ermittlung von Schaltsignalen für ein abgestuftes Getriebe ist durch die DE-OS 31 01 056 vorbekannt. Bei dieser bekannten Einrichtung werden dem Antriebsmoment der Antriebsmaschine entsprechende Antriebsgrößen und der Beschleunigung des Fahrzeuges entsprechende Beschleunigungsgrößen sowie weitere Kenngrößen über den Betriebszustand des Fahrzeuges zur Ermittlung der erwähnten Schaltsignale in einer Rechenschaltung verarbeitet. Zusätzlich wird der Rechenschaltung über einen manuell einstellbaren Schalter in drei Stufen der vom Fahrer geschätzte Beladungszustand des Fahrzeuges mitgeteilt.

Die Ermittlung des Gewichtes eines von einer Antriebsmaschine angetriebenen Fahrzeuges oder einer diesem Gewicht entsprechenden Gewichtsgröße ist z. B. auch dann erforderlich, wenn bei einer automatischen lastabhängigen Bremsanlage das Gewicht des abzubremsenden Fahrzeuges berücksichtigt werden muß. Zur mehr oder weniger genauen Erfassung des Fahrzeuggewichtes kann man hier z. B. daran denken, als Fahrzeug auf einer Waage zu wiegen und das so ermittelte Gewicht auf ein Einstellglied der Bremsanlage zu übertragen. Automatisch lastabhängige Bremskraftregler arbeiten in der Regel allerdings mit einem Hebelmechanismus, der sinngemäß zwischen dem Aufbau des Fahrzeuges und einer Achse des Fahrzeuges angeordnet ist und in Abhängigkeit von der Beladung des Fahrzeuges betätigt wird.

Die erwähnten Mittel und Einrichtungen zur Erfassung des Gewichtes eines Fahrzeuges sind jedoch entweder umständlich oder vergleichbar aufwendig und ungenau.

Der Erfindung liegt deshalb die Aufgabe zugrunde, eine Einrichtung und ein Verfahren der eingangs genannten Art zu schaffen, bei denen mit vergleichsweise einfachen und kostengünstigen Mitteln eine genaue Messung oder Bestimmung des Gewichtes des Fahrzeuges bzw. einer dem Gewicht entsprechenden Gewichtsgröße möglich ist.

Diese Aufgabe wird durch die im Patentanspruch 1 angegebene Einrichtung und das im Patentanspruch 14 angegebene Verfahren gelöst. Vorteilhafte Ausführungsbeispiele und Weiterbildungen der Erfindung sind in den Unteransprüchen angegeben.

Durch die erfindungsgemäße Einrichtung und durch das erfindungsgemäße Verfahren ergibt sich in vorteilhafter Weise eine einfache Möglichkeit, das Fahrzeuggewicht bzw. eine diesem Gewicht entsprechende Gewichtsgröße während der Fahrt des Fahrzeuges mit üblichen Sensoren oder Gebern für direkt meßbare Fahrzeugparameter und ggf. mit einer üblichen Mikrocomputer-Einrichtung zu ermitteln.

Der Erfindung liegt die Erkenntnis zugrunde, daß sich das zu einem beliebigen Zeitpunkt $t_x$ von der Antriebsmaschine abgegebene Antriebsmoment wie folgt darstellen läßt :

$$(1) \qquad M_{Ax} = G \cdot f(\ddot{S}_x) + W_{Rx} + W_{Stx} + W_{Lx} \,.$$

In dieser Gleichung (1) bedeuten :

$M_{AX}$ — Antriebsmoment
$G$ — Gewicht des Fahrzeuges
$f(\ddot{S}_x)$ — Funktion der Beschleunigung des Fahrzeugs
$\ddot{S}_x$ — Beschleunigung des Fahrzeugs
$W_{Rx}$ — Widerstandsmoment der Rollreibung
$W_{Stx}$ — Widerstandsmoment der Fahrbahn-Steigung
$W_{Lx}$ — Widerstandsmoment des Luftwiderstandes.

Bei der Gleichung (1) wurde zur Vereinfachung u. a. der Einfluß der rotierenden Massen des Fahrzeuges (z. B. Getriebe, Motor, Feder) vernachlässigt.

Für einen bestimmten Zeitpunkt $t_{x1}$ ergibt sich für das von der Antriebsmaschine abgegebene Antriebsmoment :

$$(2) \qquad M_{Ax1} = G \cdot f(\ddot{S}_{x1}) + W_{Rx1} + W_{St1} + W_{Lx1} \,.$$

Wenn man nun die Gleichungen (1) und (2) voneinander abzieht und die so erhaltene neue Gleichung nach der Größe G auflöst, so erhält man das folgende Ergebnis :

$$(3) \qquad G = \frac{M_{Ax} - M_{Ax1}}{f(\ddot{S}_x) - f(\ddot{S}_{x1})} \,,$$

wenn die Summe der Widerstandsmomente zu den Zeitpunkten $t_x$ und $t_{x1}$ gleich oder annähernd gleich ist. Dies bedeutet, daß die beiden Zeitpunkte $t_x$ und $t_{x1}$ vergleichsweise kurzzeitig aufeinander folgen oder daß sich aufgrund anderer Umstände zu den Zeitpunkten $t_x$ und $t_{x1}$ für die Steigung der Fahrstrecke und die Geschwindigkeit des Fahrzeuges jeweils gleiche oder annähernd gleiche Werte ergeben.

Die Gleichung (3) bedeutet für die praktische Auswertung, daß eine ausreichende Differenz der Antriebemomente gemessen werden muß, um einen brauchbaren Wert für das Gewicht des Fahrzeuges berechnen zu können.

Wenn man in vorteilhafter Weise dafür sorgt, daß sich das Fahrzeug zu dem Zeitpunkt $t_{x1}$ in einem antriebslosen Zustand, d. h. in einem Zustand befindet, in dem das Antriebsmoment der Antriebsmaschine gleich Null ist, so ist für die Ermittlung des Gewichtes des Fahrzeuges nur noch ein einziger Wert des Antriebsmomentes zu berücksichtigen.

Der erwähnte antriebslose Zustand ist dadurch zu erreichen, daß eine Kupplung im Antriebsstrang des Fahrzeuges getrennt wird. Es ist ferner möglich, das Fahrzeug zum Erreichen des antriebslosen Zustandes so anzutreiben, daß sich praktisch eine verzögerungs- und beschleunigungsfreie Fahrt ergibt.

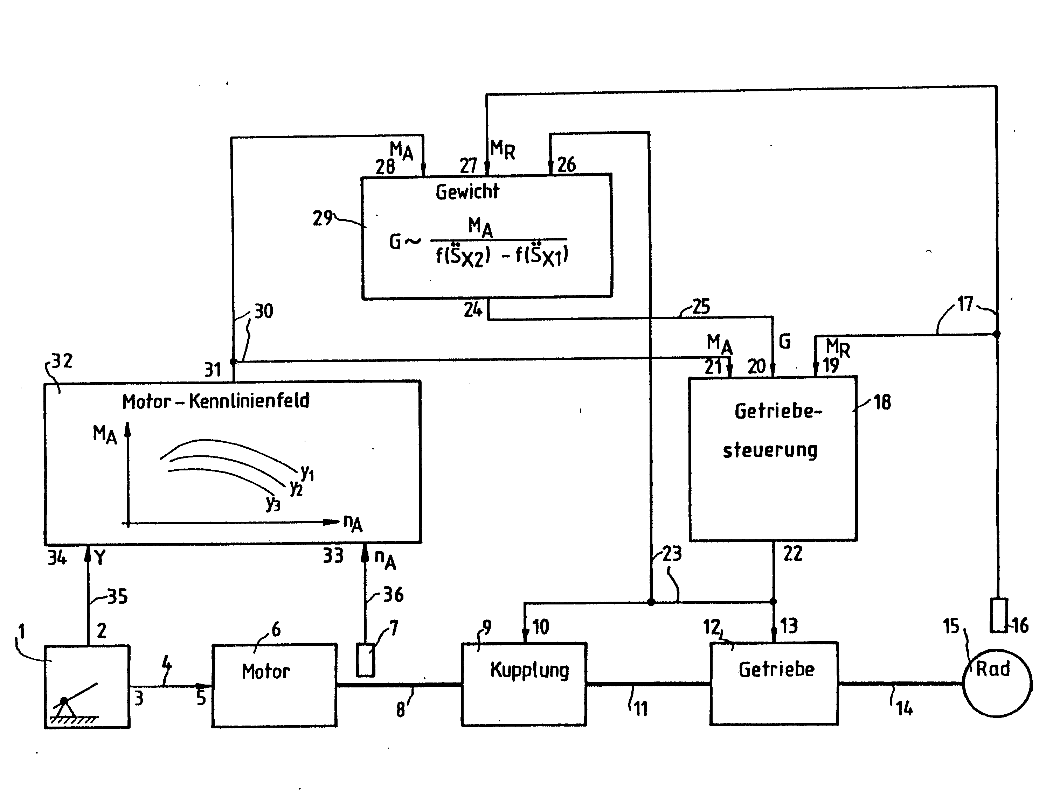

Die Erfindung wird anhand eines Ausführungsbeispiels, das in der Zeichnung dargestellt ist, näher erläutert.

Die Zeichnung zeigt in vereinfachter Darstellung die wesentlichen Elemente eines von einer Antriebsmaschine angetriebenen Fahrzeuges. Als Antriebsmaschine dient ein Verbrennungsmotor 6, dessen Kraftstoffzufuhr mittels eines Gebers 1 steuerbar ist. Über eine Welle 8 ist der Motor 6 mit einer Kupplung 9 verbunden, die ihrerseits über eine Welle 11 mit einem Getriebe 12 verbunden ist. Das Getriebe 12 dient zum Antrieb einer Achse 14, die ihrerseits die angetriebenen Fahrzeugräder des Fahrzeuges antreibt. Von den angetriebenen Rädern des Fahrzeuges ist der Einfachheit halber nur das Rad 15 dargestellt.

Der Geber 1 für die Steuerung der Kraftstoffzufuhr des Motors 6 weist einen Signalausgang 3 auf, der über eine Signalleitung 4 mit einem Signaleingang 5 des Motors 6 verbunden ist. Der Geber 1 ist ferner mit einer Einrichtung versehen, die die Stellung des Gebers 1 als Signalgröße Y darstellt. Diese Signalgröße Y ist an einem Signalausgang 2 des Gebers 1 abrufbar. Im einfachsten Fall enthält der Geber 1 als Steuerglied für die Kraftstoffzufuhr des Motors 6 ein übliches, mechanisch arbeitendes Gaspedal. Der Geber 1 kann jedoch auch — wie im dargestellten Ausführungsbeispiel — als elektrischer oder elektronischer Geber ausgebildet sein, wenn der Motor 6 entsprechend mittels eines Steuersignals steuerbar ist. Schließlich kann der Geber 1 auch als eine die Kraftstoffzufuhr direkt steuernde Regelstange eines Dieselmotors ausgebildet sein.

Die zwischen der antriebsseitigen Welle 8 und der abtriebsseitigen Welle 11 angeordnete Kupplung 9 ist mittels eines Steuersignals betätigbar, das über eine Signalleitung 23 einem Signaleingang 10 der Kupplung 9 zuführbar ist.

Das Getriebe 12 ist ebenfalls elektrisch steuerbar, wobei Signaleingänge 13 des Getriebes 12 zum Empfang entsprechender Steuersignale zum Einlegen des jeweils gewünschten oder erforderlichen Ganges dienen. Sowohl die Kupplung 9 als auch das Getriebe 12 können im einfachsten Fall rein mechanisch betätigt werden. In diesem Fall stellen die Signaleingänge 10 und 13 symbolhaft die Verbindung zwischen der Kupplung 9 und dem entsprechenden Betätigungsmechanismus und dem Getriebe 12 und dem entsprechenden Betätigungsmechanismus dar.

Zur Steuerung des Getriebes 12 ist eine als Getriebesteuerung dienende Einrichtung 18 vorgesehen. Im einfachsten Fall arbeitet diese Getriebesteuerung 18 so, daß das Getriebe 12 in Abhängigkeit von der Geschwindigkeit des Fahrzeuges und somit in Abhängigkeit von der Drehzahl $n_R$ der angetriebenen Räder automatisch geschaltet wird. Zusätzlich werden in der Getriebesteuerung 18 das Gewicht G des Fahrzeuges bzw. eine diesem Gewicht entsprechende Gewichtsgröße sowie das jeweilige Antriebsmoment $M_A$ des Motors 6 berücksichtigt. Zur Erfassung der Drehzahl $n_R$ des angetriebenen Rades 15 dient ein Drehzahlgeber 16, dessen Drehzahl-Signal über eine Signalleitung 17 einem Signaleingang 19 der Getriebesteuerung 18 zugeführt ist. Die erwähnte Gewichtsgröße G wird der Getriebesteuerung 18 über eine Signalleitung 20 zugeführt, während das jeweilige Antriebsmoment $M_A$ oder eine diesem Antriebsmoment entsprechende Antriebsgröße der Getriebesteuerung 18 über einen Signaleingang 21 zugeführt wird.

Über Signalausgänge 22 und entsprechende Signalleitungen 23 ist die Getriebesteuerung 18 mit den Signaleingängen 13 des Getriebes 12 und dem Signaleingang 10 der Kupplung 9 verbunden.

Wenn in der Getriebesteuerung 18 in Abhängigkeit von der Geschwindigkeit des Fahrzeuges und damit der Drehzahl des Rades 15 und unter Berücksichtigung vorgegebener Auswahlkriterien (Gewicht und Antriebsmoment des Fahrzeuges) ein neuer Gang festgelegt wird, wird die Kupplung 9 über ihren Signaleingang 10 betätigt und anschließend bei getrennter Kupplung das Getriebe 12 über seine Signaleingänge 13 von der Getriebesteuerung 18 umgeschaltet. Danach wird dann die Kupplung 9 wieder geschlossen. Die Steuerung bzw. Betätigung der Kupplung 9 und des Getriebes 12 können — wie oben angedeutet — auch rein mechanisch über Servomotoren der Getriebesteuerung 18 erfolgen.

Der Signaleingang 20 der Getriebesteuerung 18 ist über eine Signalleitung 25 mit einem Signalausgang 24 eines als Auswerte- und Steuereinrichtung ausgebildeten Steuerwerkes 29 zur Ermittlung des Gewichtes des Fahrzeuges verbunden.

Der Signaleingang 21 der Getriebesteuerung 18 ist über eine Leitung 30 an den Signalausgang 31 eines Motor-Kennlinienfeld-Speichers 32 angeschlossen, der an dem erwähnten Signalausgang 31 ein dem momentanen Antriebsmoment des Motors 6 entsprechendes Signal zur Verfügung stellt. Das jeweilige momentane Antriebsmoment $M_A$ des Motors 6 wird in dem Speicher 32 ermittelt, der in einem Kennlinienfeld die Abhängigkeit der folgenden Größen voneinander enthält : momentanes Antriebsmoment $M_A$ des Motors 6, Drehzahl $n_A$ des Motors 6 und Stellung y des Gebers (Gaspedals) 1. Im dargestellten Ausführungsbeispiel enthält der Speicher 32 für verschiedene Werte ($y_1$, $y_2$, $y_3$) der Stellung y des Gebers 1 je eine Kennlinie für die Abhängigkeit des momentanen Antriebsmomentes $M_A$ von der Drehzahl $n_A$.

Die Stellung y des Gebers 1 wird einem Signaleingang 34 des Speichers 32 über eine Signalleitung 35 zugeführt, die ihrerseits an den Signalausgang 2 des Gebers 1 angeschlossen ist. Die Drehzahl $n_A$ des Motors 6 wird mittels eines die Welle 8 abtastenden Sensors 7 ermittelt und über eine Signalleitung 36 einem Signaleingang 33 des Speichers 32 zugeführt. Der Speicher 32 ist so ausgebildet, daß er für jedes Wertepaar $y/n_A$ das momentane Antriebsmoment $M_A$ an seinem Signalausgang 31 zur Verfügung stellt. Die Drehzahl $n_A$ des Motors 6 kann auch aus der Rad-Drehzahl $n_R$ des Rades 15 berechnet werden, wenn das jeweilige Übersetzungsverhältnis des Getriebes 12 berücksichtigt wird.

In dem Steuerwerk 29 zur Ermittlung des Gewichtes des Fahrzeuges wird das Verhältnis zwischen dem momentanen Antriebsmoment $M_A$ des Motors 6 und einer Differenz zweier Rechengrößen gebildet, wobei die erwähnten Rechengrößen jeweils eine der Beschleunigung des Fahrzeuges entsprechende Beschleunigungsgröße enthalten. Diese beiden Beschleunigungsgrößen $\ddot{s}_{x2}$ und $\ddot{s}_{x1}$ werden zu verschiedenen Zeiten ermittelt, wobei die eine Beschleunigungsgröße zu einem Zeitpunkt ermittelt wird, in dem das Fahrzeug dem Antrieb durch den Motor 6 unterliegt, und wobei die andere Beschleunigungsgröße zu einem Zeitpunkt ermittelt wird, in dem sich das Fahrzeug in einem antriebslosen Zustand befindet. In diesem antriebslosen Zustand wird das Fahrzeug nicht wesentlich beschleunigt oder verzögert.

Um die erwähnten Rechenoperationen durchführen zu können, wird dem Steuerwerk 29 über die Signalleitung 30 und einen Signaleingang 28 das momentane Antriebsmoment $M_A$ des Motors 6 zugeführt. Der zur Bildung der Beschleunigungsgrößen $s''_{x2}$ und $s''_{x1}$ erforderliche zeitliche Verlauf der Drehzahl $n_R$ des angetriebenen Rades 15 wird einem Signaleingang 27 des Steuerwerkes 29 zugeführt. Über die Signalleitungen 23 schließlich wird einem Signaleingang 26 des Steuerwerkes 29 der Zeitpunkt mitgeteilt, zu dem die Kupplung 9 durch Steuersignale der Getriebesteuerung 18 getrennt ist. Auf diese Weise kann in dem Steuerwerk 29 zwischen solchen Zeiten, in denen das Fahrzeug dem Antrieb durch den Motor 6 unterliegt, und solchen Zeiten, in denen das Fahrzeug nicht dem Antrieb des Motors 6 unterliegt, unterschieden werden. Zu diesen unterschiedlichen Zeiten werden auch die Beschleunigungsgrößen $s''_{x2}$ und $s''_{x1}$ gemessen bzw. bestimmt. Hierzu dient z. B. eine Differenziereinrichtung zur einfachen bzw. doppelten rechnerischen Differentiation der Rad-Drehzahl.

Der antriebslose Zustand des Fahrzeuges, der im dargestellten Ausführungsbeispiel durch das Trennen der Kupplung 9 erzeugt wird, könnte z. B. auch dadurch nachgebildet werden, daß bei geschlossener Kupplung der Motor 6 so gesteuert wird, daß das Fahrzeug keine Verzögerung und Beschleunigung erfährt. Man kann entsprechend auch eine Einrichtung vorsehen, die einen solchen Zustand der verzögerungsfreien bzw. beschleunigungsfreien Fahrt des Fahrzeuges erkennen und genau in diesem Zeitpunkt die entsprechende Messung bzw. Berechnung der dem antriebslosen Zustand entsprechenden Kenngrößen vornehmen kann.

Das Steuerwerk 29 kann auch so ausgebildet sein, daß verschiedene ermittelte Gewichtsgrößen G zur Bildung eines Mittelwertes für die Gewichtsgrößen verwendet werden und daß der so ermittelte Mittelwert der Gewichtsgrößen seinerseits zur Anzeige oder Bestimmung des Gewichtes des Fahrzeuges herangezogen wird. In diesem Fall wird also der Getriebesteuerung 18 ein Gewichts-Mittelwert zugeführt.

Es können auch Mittel vorgesehen sein, die nur solche Gewichtsgrößen oder nur solche Mittelwerte der Gewichtsgrößen zur Auswertung kommen lassen, die eine vorgegebene Abweichung von einem vorgegebenen Wert oder einem früher ermittelten Wert der Gewichtsgrößen nicht überschreiten.

Um sicherzustellen, daß auch dann, wenn in dem Steuerwerk 29 z. B. wegen zu kurzer Fahrzeit noch kein ausreichend genauer Wert für die Gewichtsgröße G vorliegt, in der Getriebesteuerung 18 mit einem brauchbaren Wert für die Gewichtsgröße rechnen zu können, ist es vorteilhaft, statt der von dem Steuerwerk 29 ermittelten Gewichtsgröße G eine mittlere Gewichtsgröße $G_0$ zu verwenden, die z. B. einem halb beladenen Fahrzeug entspricht.

Für eine sichere Bestimmung und Berechnung der Gewichtsgröße G eignet sich in vorteilhafter Weise ein in dem Steuerwerk 29 vorgesehener Mikrocomputer, mit dem insbesondere auch die zeitabhängigen Rechenvorgänge bezüglich der Beschleunigungsgrößen auf einfache Weise realisiert werden können.

Die beschriebene Ermittlung der Gewichtsgröße G im Steuerwerk 29 kann so abgeändert werden, daß statt der Wahl des einen Meßzeitpunktes für das Antriebsmoment $M_A$ und die Beschleunigungsgröße $\ddot{s}$ während des antriebslosen Zustandes des Fahrzeuges dieser Meßzeitpunkt wie auch der zweite Meßzeitpunkt für die genannten Größen während des normalen, angetriebenen Zustandes gewählt wird. In diesem Fall ist im Steuerwerk 29 statt eines Wertes für das Antriebsmoment eine Differenz von zwei verschiedenen Antriebsmomenten zu verarbeiten.

Für alle beschriebenen Fälle gilt, daß die Erfassung der Beschleunigungsgröße sowohl positive als

4

**0 111 636**

auch negative Meßwerte der Beschleunigung ergeben kann.

Wenn für die Ermittlung des Gewichtes des Fahrzeuges zwei zu verschiedenen Zeitpunkten bestimmte Werte des Antriebsmomentes ausgewertet werden, kann man vorteilhaft eine zusätzliche Einrichtung vorsehen, in der fortwährend bzw. periodisch in relativ kurzen Zeitabständen der Wert des Antriebsmomentes ermittelt wird. Es kann dann beim Vorliegen einer ausreichend großen Differenz zwischen zwei aufeinanderfolgend gemessenen Werten des Antriebsmomentes das Gewicht ermittelt werden. Derartige ausreichend unterschiedliche Wertes des Antriebsmomentes können z. B. dann auftreten, wenn der Fahrer des Fahrzeuges größere Änderungen der Stellung des Gaspedals vornimmt.

**Patentansprüche**

1. Einrichtung zur Ermittlung des Gewichtes eines von einer Antriebsmaschine angetriebenen Fahrzeuges, gekennzeichnet durch folgende Merkmale :

a) es ist eine erste Meßeinrichtung zur Ermittlung einer dem Antriebsmoment der Antriebsmaschine (6) entsprechenden Antriebsgröße vorgesehen ;

b) es ist eine zweite Meßeinrichtung zur Ermittlung einer der Beschleunigung des Fahrzeuges entsprechenden Beschleunigungsgröße vorgesehen ;

c) es ist eine Auswerteeinrichtung vorgesehen, die unter Verwertung zweier zu verschiedenen Zeitpunkten ermittelter Werte der Beschleunigungsgröße und eines Wertes oder zweier, zu verschiedenen Zeitpunkten ermittelter Werte der Antriebsgröße zur Ermittlung einer dem Gewicht des Fahrzeuges entsprechenden Gewichtsgröße dient ;

d) es ist eine Steuereinrichtung zur Steuerung und/oder Abfrage der beiden Meßeinrichtungen vorgesehen, die so ausgebildet ist, daß der Wert bzw. die Werte der Antriebsgröße, der bzw. die von der Auswerteeinrichtung zur Ermittlung der Gewichtsgröße verwendet wird bzw. werden, zur gleichen Zeit wie die von der Auswerteeinrichtung verwerteten Werte der Beschleunigungsgröße ermittelt wird oder werden.

2. Einrichtung nach Anspruch 1, dadurch gekennzeichnet, daß die erste Meßeinrichtung zur direkten Messung des Antriebsmomentes der Antriebsmaschine (6) dient.

3. Einrichtung nach Anspruch 1, gekennzeichnet durch folgende Merkmale :

a) die erste Meßeinrichtung umfaßt einen die Drehzahl der Antriebsmaschine erfassenden Drehzahlgeber (7) ;

b) die erste Meßeinrichtung umfaßt ferner einen weiteren Geber (1) zur Erfassung einer Antriebsmaschinen-Steuergröße, die der Stellung des die Antriebsmaschine (6) steuernden Steuergliedes entspricht ;

c) es ist in der ersten Meßeinrichtung ein Kennlinienfeld-Speicher (32) vorgesehen, der eine Kennlinienschaar speichert, die die gegenseitige Abhängigkeit von Antriebsmaschinen-Drehzahl, Antriebsmaschinen-Steuergröße und Antriebsgröße wiedergibt ;

d) ein Signalausgang des Kennlinienfeld-Speichers (32) ist mit einem der Antriebsgröße zugeordneten Signaleingang (28) der Auswerteeinrichtung verbunden.

4. Einrichtung nach Anspruch 3 für ein Fahrzeug mit einer als Brennkraftmaschine ausgebildeten Antriebsmaschine, die über ein Gaspedal angesteuert wird, dadurch gekennzeichnet, daß das Steuerglied als Gaspedal ausgebildet ist.

5. Einrichtung nach einem der vorhergehenden Ansprüche, dadurch gekennzeichnet, daß die zur Erfassung einer der Beschleunigung des Fahrzeuges entsprechenden Beschleunigungsgröße vorgesehene Meßeinrichtung einen die Drehzahl wenigstens eines Fahrzeugrades (15) erfassenden Drehzahlgeber (16) enthält, dessen Ausgangssignal einer Differenziereinrichtung zur Bestimmung einer aus der Drehzahl des Fahrzeugrades (15) abgeleiteten Beschleunigungsgröße zugeführt werden kann.

6. Einrichtung nach wenigstens einem der vorhergehenden Ansprüche, dadurch gekennzeichnet, daß die Auswerteeinrichtung eine Rechenschaltung zur Bildung des Verhältnisses zwischen einer eine Antriebsgröße enthaltenen Rechengröße oder der Differenz zweier Rechengrößen, die zwei zu unterschiedlichen Zeitpunkten ermittelte Antriebsgrößen enthalten, einerseits und einer Differenz zweier weiterer Rechengrößen, die die zu den erwähnten Zeitpunkten ermittelten Beschleunigungsgrößen enthalten, andererseits enthält.

7. Einrichtung nach wenigstens einem der vorhergehenden Ansprüche, dadurch gekennzeichnet, daß die Auswerteeinrichtung so ausgebildet ist, daß die Ermittlung der Gewichtsgröße wiederholt vorgenommen wird.

8. Einrichtung nach Anspruch 7, dadurch gekennzeichnet, daß die Auswerteeinrichtung so ausgebildet ist, daß mehrere ermittelte Gewichtsgrößen zur Bildung eines Mittelwertes für die Gewichtsgrößen verwendet werden und daß der so ermittelte Mittelwert der Gewichtsgrößen seinerseits zur Anzeige oder Bestimmung des Gewichtes des Fahrzeuges herangezogen wird.

5

9. Einrichtung nach Anspruch 7 oder 8, dadurch gekennzeichnet, daß Mittel vorgesehen sind, die nur solche Gewichtsgrößen oder nur solche Mittelwerte der Gewichtsgrößen zur Auswertung kommen lassen, die eine vorgegebene Abweichung von einem vorgegebenen Wert oder einem früher ermittelten Wert der Gewichtsgrößen nicht überschreiten.

10. Einrichtung nach wenigstens einem der vorhergehenden Ansprüche, dadurch gekennzeichnet, daß die Auswerteeinrichtung oder Teile davon und/oder die Steuereinrichtung oder Teile davon von einem Mikrocomputer gebildet sind.

11. Einrichtung nach wenigstens einem der vorhergehenden Ansprüche, gekennzeichnet durch folgende Merkmale :

a) in der Auswerteeinrichtung wird für jede Ermittlung der Gewichtsgrößen nur ein Wert der Antriebsgröße verwendet ;

b) die Steuereinrichtung ist so ausgebildet, daß der von der Auswerteeinrichtung zu verwertende Wert der Antriebsgröße und einer der von der Auswerteeinrichtung zu verwertenden Werte der Beschleunigungsgröße zu einem Zeitpunkt ermittelt werden, in dem das Fahrzeug dem Antrieb durch die Antriebsmaschine (6) unterliegt, und daß der andere von der Auswerteeinrichtung zu verwertende Wert der Beschleunigungsgröße zu einem Zeitpunkt ermittelt wird, in dem sich das Fahrzeug in einem einem antriebslosen Zustand des Fahrzeuges entsprechenden Zustand befindet.

12. Einrichtung nach Anspruch 11 für ein Fahrzeug mit einer Kupplung zur Trennung der angetriebenen Fahrzeugräder vom Antriebsstrang des Fahrzeuges, gekennzeichnet durch folgende Merkmale :

a) die Kupplung (9) ist mit einem Steuereingang (10) zum Steuern der Kupplungsbetätigung versehen ;

b) der Steuereingang (10) der Kupplung (9) ist mit einem Steuerausgang (22) der Steuereinrichtung (18, 29) verbunden ;

c) die Steuereinrichtung (18, 29) ist so ausgebildet, daß sie dann ein Steuersignal zur Trennung der Kupplung (9) erzeugt, wenn der dem antriebslosen Zustand des Fahrzeuges zugeordnete Wert der Beschleunigungsgröße ermittelt wird.

13. Einrichtung nach wenigstens einem der vorhergehenden Ansprüche, dadurch gekennzeichnet, daß die Steuereinrichtung und die Antriebsmaschine (6) so ausgebildet sind, daß der antriebslose Zustand des Fahrzeuges durch eine Steuerung der Antriebsleistung der das Fahrzeug weiter antreibenden Antriebsmaschine (6) dadurch nachbildbar ist, daß die Antriebsmaschine (6) im antriebslosen Zustand praktisch keine Beschleunigungs- oder Verzögerungskräfte auf das Fahrzeug ausübt.

14. Verfahren zur Ermittlung des Gewichtes eines von einer Antriebsmaschine angetriebenen Fahrzeuges, gekennzeichnet durch die folgenden Verfahrensschritte :

a) es werden zu verschiedenen Zeitpunkten Werte einer der Beschleunigung des Fahrzeuges entsprechenden Beschleunigungsgröße ermittelt ;

b) zu den erwähnten verschiedenen Zeitpunkten wird ein Wert oder werden zwei Werte einer dem Antriebsmoment des Fahrzeuges entsprechenden Antriebsgröße ermittelt ;

c) anschließend wird das Verhältnis einer ersten Rechengröße zu einer zweiten Rechengröße gebildet, wobei die erste Rechengröße die Antriebsgröße oder die Differenz von zwei die beiden ermittelten Antriebsgrößen enthaltenden Hilfsgrößen enthält und wobei die zweite Rechengröße die Differenz von zwei weiteren, die beiden ermittelten Beschleunigungsgrößen enthaltenden Hilfsgrößen enthält.

**Claims**

1. Device for ascertaining the weight of a vehicle driven by a driving motor, characterised by the following features :

a) there is provided a first measuring device for ascertaining a drive quantity corresponding to the driving torque of the driving motor (6) ;

b) there is provided a second measuring device for ascertaining an acceleration quantity corresponding to the acceleration of the vehicle ;

c) there is provided an evaluation device that serves to ascertain a weight quantity corresponding to the weight of the vehicle using two values of the acceleration quantity ascertained at different times and one value or two values, ascertained at different times, of the drive quantity ;

d) there is provided a control device for controlling and/or interrogating the two measuring devices, which control device is so designed that the value or values of the drive quantity which is or are used by the evaluation device for ascertaining the weight quantity is or are ascertained at the same time

6

0 111 636

as the values of the acceleration quantity used by the evaluation device.

2. Device according to claim 1, characterised in that the first measuring device serves to measure directly the driving torque of the driving motor (6).

3. Device according to claim 1, characterised by the following features :

a) the first measuring device comprises an impulse transmitter (7) which registers the speed of the driving motor ;

b) the first measuring device also comprises a further transmitter (1) for registering a control quantity of the driving motor corresponding to the position of the control member controlling the driving motor (6) ;

c) a memory (32) for a family of characteristics is provided in the first measuring device, which memory (32) stores a family of characteristics that represents the relationship between the driving motor speed, the control quantity of the driving motor and the drive quantity ;

d) a signal output of the memory (32) for a family of characteristics is connected to a signal input (28) of the evaluation device, which signal input (28) is associated with the drive quantity.

4. Device according to claim 3 for a vehicle having a driving motor in the form of an internal-combustion engine that is controlled by an accelerator pedal, characterised in that the control member is in the form of an accelerator pedal.

5. Device according to one of the preceding claims, characterised in that the measuring device for ascertaining an acceleration quantity corresponding to the acceleration of the vehicle contains an impulse transmitter (16) that registers the speed of at least one vehicle wheel (15) and the output signal of which can be fed to a differentiator for determining an acceleration quantity derived from the speed of the vehicle wheel (15).

6. Device according to at least one of the preceding claims, characterised in that the evaluation device contains a calculating circuit for forming the ratio between a computed magnitude representing a drive quantity or the difference between two computed magnitudes representing two drive quantities ascertained at different times, on the one hand, and the difference between two further computed magnitudes representing the acceleration quantities ascertained at the said times, on the other hand.

7. Device according to at least one of the preceding claims, characterised in that the evaluation device is so designed that the weight quantity is ascertained repeatedly.

8. Device according to claim 7, characterised in that the evaluation device is so designed that several ascertained weight quantities are used to form a mean value of the weight quantities, and the mean value of the weight quantities thus formed is itself used to indicate or determine the weight of the vehicle.

9. Device according to claim 7 or 8, characterised in that means are provided that allow the evaluation of only those weight quantities or only those mean values of the weight quantities that do not exceed a given deviation from a given value or from a previously ascertained value of the weight quantities.

10. Device according to at least one of the preceding claims, characterised in that the evaluation device or parts thereof and/or the control device or parts thereof are formed by a microcomputer.

11. Device according to at least one of the preceding claims, characterised by the following features :

a) in the evaluation device, only one value of the drive quantity is used for each ascertainment of the weight quantities ;

b) the control device is so designed that the value of the drive quantity to be used by the acceleration device and one of the values of the acceleration quantity to be used by the evaluation device are ascertained at a time at which the vehicle is being driven by the driving motor (6), and the other value of the acceleration quantity to be used by the evaluation device is ascertained at a time at which the vehicle is in a state corresponding to a state in which the vehicle is not being driven.

12. Device according to claim 11 for a vehicle having a clutch for disconnecting the driven vehicle wheels from the drive line of the vehicle, characterised by the following features :

a) the clutch (9) is provided with a control input (10) for controlling the actuation of the clutch ;

b) the control input (10) of the clutch (9) is connected to a control output (22) of the control device (18, 29) ;

c) the control device (18, 29) is so designed that it generates a control signal for disconnecting the clutch (9) when the value of the acceleration quantity associated with the state in which the vehicle is not being driven is ascertained.

13. Device according to at least one of the preceding claims, characterised in that the control device and the driving motor (6) are so designed that the state in which the vehicle is not being driven, which is achieved by controlling the power of the driving motor (6) that continues to drive the vehicle, can be simulated by the driving motor (6) exerting, in the state in which the vehicle is not being driven, virtually

7

no accelerating or decelerating forces on the vehicle.

14. Method for ascertaining the weight of a vehicle driven by a driving motor, characterised by the following steps :

a) values of an acceleration quantity corresponding to the acceleration of the vehicle are ascertained at different times ;

b) one value or two values of a drive quantity corresponding to the driving torque or the vehicle is or are ascertained at the said different times ;

c) the ratio of a first computed magnitude to a second computed magnitude is then formed, the first computed magnitude representing the drive quantity or the difference between two auxiliary quantities that represent the two drive quantities ascertained, and the second computed magnitude representing the difference between two further auxiliary quantities that represent the two acceleration quantities ascertained.

**Revendications**

1. Dispositif pour déterminer le poids d'un véhicule entraîné par un moteur, caractérisé par les attributs suivants :

a) il est prévu un premier dispositif de mesure pour déterminer une grandeur correspondant au moment d'entraînement du moteur (6) ;

b) il est prévu un second dispositif de mesure pour déterminer une grandeur correspondant à l'accélération du véhicule ;

c) il est prévu un dispositif de traitement qui, en exploitant deux valeurs, déterminées à des instants différents, de la grandeur correspondant à l'accélération et une valeur, ou deux valeurs déterminées à des instants différents, de la grandeur correspondant au moment d'entraînement, sert à déterminer une grandeur correspondant au poids du véhicule ;

d) il est prévu, pour commander et/ou pour interroger les deux dispositifs de mesure, un dispositif de commande qui est conçu de façon telle que la valeur ou les valeurs de la grandeur correspondant au moment d'entraînement, qui est employée, ou qui sont employées, par le dispositif de traitement pour déterminer la grandeur correspondant au poids du véhicule, est déterminée, ou sont déterminées, au même instant que les valeurs de la grandeur correspondant à l'accélération du véhicule exploitées par le dispositif de traitement.

2. Dispositif selon la revendication 1, caractérisé en ce que le premier dispositif de mesure sert à la mesure directe du moment d'entraînement du moteur (6).

3. Dispositif selon la revendication 1, caractérisé par les attributs suivants :

a) le premier dispositif de mesure comporte un émetteur de vitesse de rotation (7) qui saisit la vitesse de rotation du moteur ;

b) le premier dispositif de mesure comporte en outre un autre émetteur (1) pour saisir une grandeur de commande qui correspond à la position de l'élément de commande qui commande le moteur (6) ;

c) il est prévu, dans le premier dispositif de mesure, une mémoire de faisceau de caractéristiques (32) qui mémorise un faisceau de caractéristiques qui donne la dépendance réciproque de la vitesse de rotation du moteur, de la grandeur de commande du moteur et de la grandeur correspondant au moment d'entraînement ;

d) une sortie de signal de la mémoire du faisceau de caractéristiques (32) est reliée à une entrée de signal (28), correspondant à la grandeur correspondant au moment d'entraînement, du dispositif de traitement.

4. Dispositif selon la revendication 3 pour un véhicule comportant un moteur conçu sous forme de moteur à combustion interne et commandé par l'intermédiaire d'une pédale d'accélérateur, caractérisé en ce que l'élément de commande est conçu sous forme de pédale d'accélérateur.

5. Dispositif selon l'une des revendications précédentes, caractérisé en ce que le dispositif de mesure prévu pour saisir une grandeur correspondant à l'accélération du véhicule contient un émetteur de vitesse de rotation (16) qui saisit la vitesse de rotation d'au moins une roue (15) du véhicule et dont le signal de sortie peut être amené à un dispositif de différentiation pour déterminer une grandeur correspondant à l'accélération et dérivée de la vitesse de rotation de la roue (15) du véhicule.

6. Dispositif selon au moins l'une des revendications précédentes, caractérisé en ce que le dispositif de traitement contient un circuit de calcul pour former le rapport entre, d'une part, une grandeur de calcul contenant une grandeur corespondant au moment d'entraînement ou bien la différence de deux grandeurs de calcul qui contiennent deux grandeurs correspondant au moment d'entraînement et

**0 111 636**

déterminées à des instants différents et, d'autre part, la différence de deux autres grandeurs de calcul qui contiennent les grandeurs correspondant à l'accélération du véhicule déterminées aux instants mentionnés.

7. Dispositif selon au moins l'une des revendications précédentes, caractérisé en ce que le dispositif de traitement est conçu de façon que la détermination de la grandeur correspondant au poids s'effectue de façon répétitive.

8. Dispositif selon la revendication 7, caractérisé en ce que le dispositif de traitement est conçu de façon que plusieurs grandeurs déterminées, correspondant au poids du véhicule, soient employées pour former une valeur moyenne pour la grandeur correspondant au poids du véhicule ; et de façon que ce soit à cette valeur moyenne, ainsi déterminée de la grandeur correspondant au poids du véhicule que l'on fasse appel de son côté pour indiquer ou déterminer le poids du véhicule.

9. Dispositif selon la revendication 7 ou 8, caractérisé en ce qu'il est prévu des moyens qui ne laissent venir au traitement que les grandeurs correspondant au poids du véhicule ou que les valeurs moyennes de ces grandeurs qui ne s'écartent pas de plus d'un écart prescrit d'avec une valeur prescrite ou une valeur, déterminée antérieurement, de la valeur correspondant au poids du véhicule.

10. Dispositif selon au moins l'une des revendications précédentes, caractérisé en ce que le dispositif de traitement ou des parties de ce dispositif de traitement et/ou le dispositif de commande ou des parties de ce dispositif de commande sont formées par un micro-ordinateur.

11. Dispositif selon au moins l'une des revendications précédentes, caractérisé par les attributs suivants :

a) dans le dispositif de traitement, pour chaque détermination des grandeurs correspondant au poids du véhicule, on n'emploie qu'une valeur de la grandeur correspondant au moment d'entraînement ;

b) le dispositif de commande est conçu de façon telle que la valeur de la grandeur, correspondant au moment d'entraînement, que doit exploiter le dispositif de traitement et l'une des valeurs de la grandeur, correspondant à l'accélération, que doit exploiter le dispositif de traitement, sont déterminées à un instant où le véhicule subit l'entraînement de la part du moteur (6) ; et de façon telle que l'autre valeur de la grandeur, correspondant à l'accélération, que doit exploiter le dispositif de traitement est déterminée à un instant où le véhicule se trouve dans un état correspondant à un état non entraîné du véhicule.

12. Dispositif selon la revendication 11 pour un véhicule comportant un embrayage pour séparer les roues motrices du véhicule d'avec la ligne de transmission du véhicule, caractérisé par les attributs suivants :

a) l'embrayage (9) comporte une entrée de commande (10) pour commander la manœuvre de l'embrayage ;

b) l'entrée de commande (10) de l'embrayage (9) est reliée à une sortie de commande (22) du dispositif de commande (18, 29) ;

c) le dispositif de commande (18, 29) est conçu de façon telle qu'il produit un signal de commande pour débrayer l'embrayage (9) lorsque l'on établit la valeur de la grandeur, correspondant à l'accélération du véhicule, qui correspond à l'état non entraîné du véhicule.

13. Dispositif selon au moins l'une des revendications précédentes, caractérisé en ce que le dispositif de commande et le moteur (6) sont conçus de façon telle que l'état non entraîné du véhicule peut être simulé, en commandant la puissance d'entraînement du moteur (6), qui continue à entraîner le véhicule, par le moyen que, à l'état non entraîné, le moteur (6) n'exerce pratiquement pas de force d'accélération ou de décélération sur le véhicule.

14. Procédé pour déterminer le poids d'un véhicule entraîné par un moteur, caractérisé par les pas suivants du procédé :

a) on établit à des instants différents des valeurs d'une grandeur correspondant à l'accélération du véhicule ;

b) aux différents instants mentionnés on détermine une valeur ou deux valeurs d'une grandeur correspondant au moment de l'entraînement du véhicule ;

c) on forme ensuite le rapport entre une première grandeur de calcul et une seconde grandeur de calcul, étant précisé que la première grandeur de calcul contient la grandeur correspondant au moment d'entraînement ou la différence de deux grandeurs auxiliaires contenant les deux grandeurs déterminées correspondant au moment d'entraînement et étant précisé que la seconde grandeur de calcul contient la différence de deux autres grandeurs auxiliaires contenant les deux grandeurs déterminées correspondant à l'accélération.

9

$$G \sim \frac{M_A}{f(\ddot{S}_{X2}) - f(\ddot{S}_{X1})}$$